# EUROPÄISCHE PATENTSCHRIFT

(11) **EP 2 447 679 B1**
(45) Veröffentlichungstag und Bekanntmachung des Hinweises auf die Patenterteilung: **15.01.2014**
(21) Anmeldenummer: 11007119.8
(22) Anmeldetag: 01.09.2011
(51) Int. Cl.: G01D 11/30, F15B 15/28

(54) **Vorrichtung zur Befestigung eines Sensors**
Device for attaching a sensor
Dispositif de fixation d'un capteur

(30) Priorität: 28.10.2010 DE 202010014864 U
(43) Veröffentlichungstag der Anmeldung: 02.05.2012
(73) Patentinhaber: SICK AG, 79183 Waldkirch/Breisgau (DE)
(72) Erfinder: Faber, Helge, 79395 Neuenburg (DE)
(74) Vertreter: Manitz, Finsterwald & Partner GbR

(56) Entgegenhaltungen:
- DE-A1- 10 003 941
- DE-A1-102007 056 340
- DE-C2- 4 041 090

## Beschreibung

Die vorliegende Erfindung betrifft eine Vorrichtung zur Befestigung eines Sensors an einem Trägerbauteil.

Sensoren müssen in vielen Bereichen der Industrie an Maschinen, Transporteinrichtungen oder dergleichen angebracht werden. Es ist bekannt, den zu befestigenden Sensor in eine als Sensoraufnahme dienende Aussparung in einem elastischen Element einzusetzen. Durch Zusammendrücken des elastischen Elements von außen ist es möglich, den Sensor in dem elastischen Element festzuhalten. Das elastische Element kann zu diesem Zweck beispielsweise zwischen zwei Drückelemente eingespannt sein.

In der Patentschrift DE 40 41 090 C2 ist eine Befestigungsvorrichtung dieser Art offenbart. Durch gegeneinander Spannen der zwei Drückelemente wird bei dieser Vorrichtung nicht nur der Querschnitt der Sensoraufnahme in dem elastischen Element verringert und der Sensor somit in der Aufnahme eingespannt, sondern es wird auch das elastische Element aufgrund einer beim Zusammendrücken erzeugten Ausbeulung in einer Nut des Trägerbauteils verspannt. Das elastische Element dient hier also sowohl zur Verankerung des elastischen Elements an dem Trägerbauteil als auch zur Halterung des Sensors in dem elastischen Element.

Problematisch sind bei derartigen Systemen die freiliegenden Ecken, Kanten und Gewindeabschnitte, in welchen sich Wasser, Schmutz und Keime sammeln können. Dies ist insbesondere bei Anwendungen in der Lebensmittel- oder Pharmaindustrie nachteilig, da hier aufgrund der hohen Hygieneanforderungen relativ häufige Reinigungsphasen stattfinden, bei welchen unerwünschte Rückstände an der Befestigungsvorrichtung zurückbleiben können. Darüber hinaus erfordern die Systeme des Stands der Technik eine aufwändige Anpassung des Trägerbauteils an die Befestigungsvorrichtung.

Es ist daher eine Aufgabe der Erfindung, eine Möglichkeit zur Befestigung eines Sensors an einem Trägerbauteil anzugeben, welche einfach und kostengünstig in der Ausführung ist und welche sich auch für den Einsatz in Anwendungsgebieten mit hohen hygienischen Anforderungen eignet.

Die Lösung der Aufgabe erfolgt durch eine Vorrichtung mit den Merkmalen des Anspruchs 1.

Erfindungsgemäß umfasst die Vorrichtung ein das elastische Element aufnehmendes Gehäuse, wobei Befestigungsmittel zum Befestigen des Gehäuses an dem Trägerbauteil vorgesehen sind, die dazu ausgebildet sind, zusätzlich das Gehäuse derart in Richtung einer Andrückfläche des Trägerbauteils vorzuspannen, das ein im Bereich der Andrückfläche aus einer Öffnung des Gehäuses ragender Überstandsabschnitt des elastischen Elements unter Verringerung des Querschnitts der Aussparung zusammengedrückt wird. Die Verankerung der Gesamtanordnung erfolgt also nicht durch Verspannen des elastischen Elements in einer Nut des Trägerbauteils, sondern über separate Befestigungsmittel und das Gehäuse, welches vorzugsweise nicht elastisch ist. Beim Vorspannen des Gehäuses gegen die Andrückfläche wird der Querschnitt der Aussparung verringert und somit der Sensor sicher in dem elastischen Element verankert. Gleichzeitig wird das Gehäuse mit dem aufgenommenen elastischen Element sicher am Trägerbauteil befestigt. Die Halterung für den Sensor ist also zweiteilig ausgebildet, wobei ein Teil elastisch ist und in dem anderen Teil aufgenommen ist. An dem Trägerbauteil muss folglich keine an das Befestigungssystem angepasste Nut oder andere Aussparung vorgesehen sein, da lediglich eine z.B. ebene Andrückfläche zum Stützen des Gehäuses vorliegen muss. Das Befestigungssystem ist somit besonders flexibel und an vielen unterschiedlichen Trägerbauteilen einsetzbar. Ein weiterer Vorteil besteht darin, dass durch das Gehäuse ein Kapselungseffekt erzielt wird, welcher in hygienischer Hinsicht günstig ist.

Weiterbildungen der Erfindung sind in den abhängigen Ansprüchen, der Beschreibung sowie den beigefügten Zeichnungen angegeben.

Gemäß einer Ausführungsform der Erfindung ist an der Öffnung des Gehäuses ein Dichtelement aus elastischem Material vorgesehen. Das Gehäuse steht somit in dichtendem Eingriff mit der Andrückfläche, so dass sich keine unerwünschten Ablagerungen in Schlitzen oder Hohlräumen zwischen dem Gehäuse und der Andrückfläche sammeln können.

Gemäß einer weiteren Ausführungsform der Erfindung weist der Überstandsabschnitt des elastischen Elements eine konkave Stirnfläche auf. Durch eine derartige konkave Stirnfläche kann der Druck auf die Aussparung besser verteilt werden, so dass sich eine zuverlässigere Haltung des Sensors in der Aussparung ergibt.

Die Befestigungsmittel können insbesondere Schrauben umfassen, welche das Gehäuse und das Trägerbauteil eingreifen. Beispielsweise können in dem Gehäuse Gewindesacklöcher vorgesehen sein, in welche von einer Rückseite des Trägerbauteils aus Schrauben einschraubbar sind. Auf diese Weise werden an der Vorderseite des Trägerbauteils sowie an der Sensorhalterung selbst jegliche hervorstehenden Schraubenköpfe oder Gewindeabschnitte vermieden, welche in hygienischer Hinsicht ungünstig sind.

Weiterhin kann das Gehäuse eine Durchführung für den Sensor definieren, wobei das elastische Element im Bereich der Durchführung eine zwischen der Außenwand des zu befestigenden Sensors und dem Gehäuse wirksame Dichtlippe bildet. Aufgrund der Dichtlippe werden somit auch zwischen der Außenwand des Sensors und dem Gehäuse jegliche Schlitze und Hohlräume vermieden, in welchen sich sonst keimfördernde Ablagerungen sammeln könnten.

Gemäß einer Ausbildung der Erfindung ist das Gehäuse halbschalenartig ausgebildet und weist konvexe Außenflächen auf. Die Außenflächen sind also bevorzugt abgerundet und weisen überall eine positive Krümmung auf, so dass jegliches Wasser und Reinigungsmittel gut abfließen kann.

Das Gehäuse kann als Spritzgussteil ausgeführt sein, wobei das elastische Element von dem Gehäuse umspritzt ist. Durch ein derartiges Umspritzen wird das Risiko eines Hineinkriechens von Wasser oder Reinigungsmittel in die Sensorhalterung - z.B. aufgrund des Kapillareffekts - vermieden, wodurch eine weitere Erhöhung des Hygienestandards erreicht werden kann.

Die Erfindung wird im Folgenden beispielhaft anhand der beigefügten Zeichnung beschrieben.
- Fig. 1: ist eine Querschnittsdarstellung einer erfindungsgemäßen Vorrichtung zur Befestigung eines Sensors an einem Trägerbauteil.
- Fig. 2: ist eine Längsschnittdarstellung der Vorrichtung gemäß Fig. 1, in welche ein Sensor eingesetzt ist.
- Fig. 3: ist eine perspektivische Darstellung der Anordnung aus Sensor und Befestigungsvorrichtung gemäß Fig. 2.

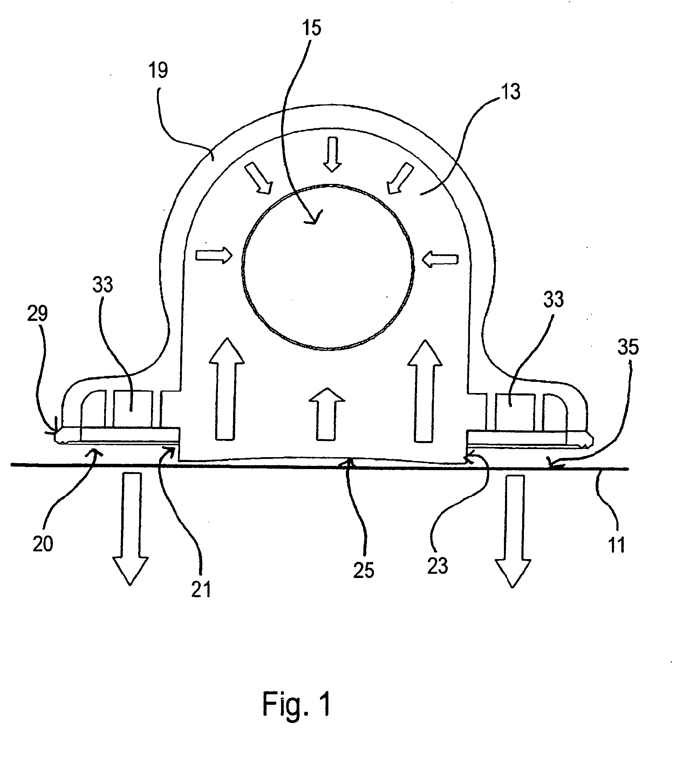

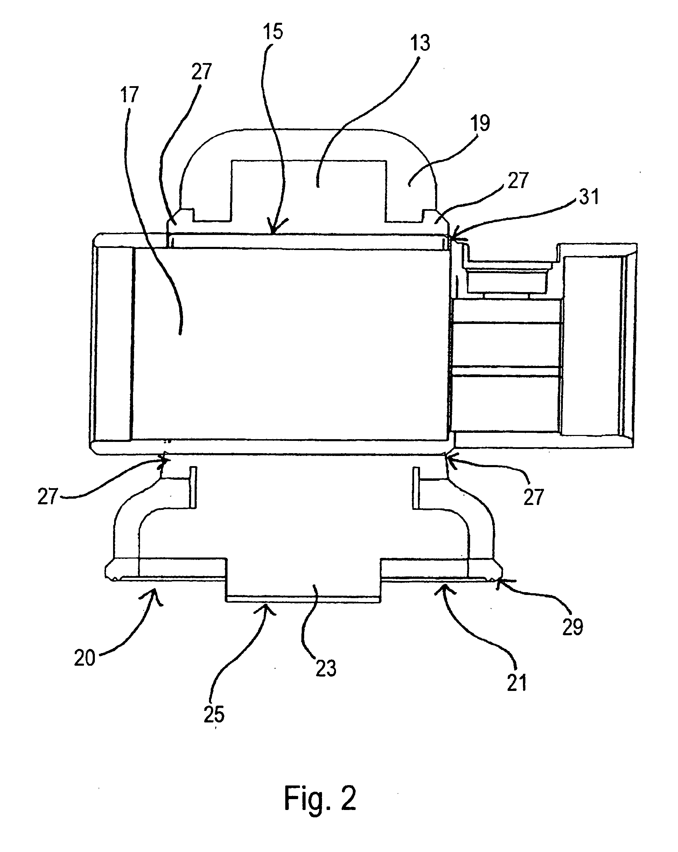

Gemäß Fig. 1 und 2 weist eine Vorrichtung zur Befestigung eines Sensors an einem lediglich schematisch dargestellten Trägerbauteil 11 ein elastisches Element 13 auf, in welchem eine zylindrische Durchführung 15 zur Aufnahme eines zu befestigenden Sensors 17 (Fig. 2) ausgebildet ist. Bei dem Sensor 17 kann es sich beispielsweise um einen gewindelosen Rundsensor handeln. Das elastische Element 13 ist in einem halbschalenartigen Gehäuse 19 aufgenommen. Das Gehäuse 19 umhüllt das elastische Element 13 im Wesentlichen vollständig, wobei jedoch an einer unteren Befestigungsseite 20 des Gehäuses 19 eine Öffnung 21 vorgesehen ist, aus welcher ein Überstandsabschnitt 23 des elastischen Elements 13 herausragt. Wie insbesondere aus Fig. 2 hervorgeht, definiert das Gehäuse 19 weiterhin zwei mit der Durchführung 15 des elastischen Elements 13 fluchtende Durchführungsöffnungen 31 für den zu befestigenden Sensor 17, wobei das elastische Element 13 im Bereich der Durchführungsöffnungen 31 jeweils eine zwischen der Außenwand des Sensors 17 und dem Gehäuse 19 wirksame Dichtlippe 27 bildet.

Wie Fig. 1 zu entnehmen ist, weist der Überstandsabschnitt 23 des elastischen Elements 13 eine konkav geformte Stirnfläche 25 auf. Die Beschaffenheit des elastischen Elements 13 kann hinsichtlich der mechanischen Festigkeit und der Beständigkeit an die jeweilige Anwendung angepasst sein. Beispielsweise kann das elastische Element 13 aus einem Elastomer und vorzugsweise aus NBR, Silikon oder Teflon gefertigt sein. Insbesondere kann das elastische Element 13 als Spritzteil hergestellt sein.

Das Gehäuse 19 kann als Metallspritzguss, insbesondere MIM, Feinguss oder als mechanisch bearbeitetes Teil hergestellt sein. Das Material des Gehäuses 19 kann an die jeweilige Anwendung angepasst sein. Beispielsweise kann das Gehäuse 19 aus einer V4A-Legierung bestehen.

Die Verbindung des elastischen Elements 13 mit dem Gehäuse 19 kann durch Fügen der beiden Teile aneinander erfolgen oder vorzugsweise dadurch, dass das elastische Element 13 von dem Gehäuse 19 umspritzt wird. Eine derartige durch Umspritzen hergestellte Anordnung ist besonders beständig gegen die bei Reinigung z.B. mittels Hochdruckreiniger auftretenden hohen mechanischen Belastungen.

An der Öffnung 21 ist ein Dichtelement 29 aus elastischem Material vorgesehen, welches die Öffnung 21 vollständig umrandet. Das Dichtelement 29 kann durch einen Abschnitt des elastischen Elements 13 selbst gebildet sein oder als separates Bauteil an dem Gehäuse 19 angebracht sein. Insbesondere kann das Dichtelement 29 eine doppelte Dichtlippe aufweisen.

Zwei zur Befestigungsseite 20 hin offene Gewindesacklöcher 33 des Gehäuses 19 dienen der Aufnahme von nicht dargestellten Schrauben, welche zur Befestigung des Gehäuses 19 an dem Trägerbauteil 11 verwendet werden.

Zur Befestigung des Sensors 17 an dem Trägerbauteil 11 wird der Sensor 17 zunächst durch die Durchführungsöffnungen 31 des Gehäuses 19 sowie die Durchführung 15 des elastischen Elements 13 gesteckt. Anschließend wird das Gehäuse 19 mittels geeigneter Befestigungsschrauben in Richtung einer ebenen Andrückfläche 35 des Trägerbauteils 11 gezogen. Dabei wird der vorstehende Überstandsabschnitt 23 zusammengedrückt, wie in Fig. 1 durch Pfeile verdeutlich ist. Der dadurch erzeugte Druck verteilt sich im elastischen Element 13. Da dieses von der Innenwand des Gehäuses 19 sowie von der Andrückfläche 35 im Wesentlichen vollständig umschlossen ist, führt der Druck letztendlich zu einer Verringerung des Querschnitts der Durchführung 15, was eine Verankerung des Sensors 17 in der Durchführung 15 bewirkt. Gleichzeitig werden die Dichtlippen 27 fest an die Außenwand des Sensors 17 gedrückt, so dass sich ein zuverlässig dichtender Übergang zwischen dem Sensor 17 und dem Gehäuse 19 ergibt. Nach Abschluss des Befestigungsvorgangs ziehen die Schrauben das Gehäuse 19 mit dem Dichtelement 29 voraus fest gegen die Andrückfläche 35, so dass sich auch ein zuverlässig dichtender Übergang zwischen dem Trägerbauteil 11 und dem Gehäuse 19 ergibt.

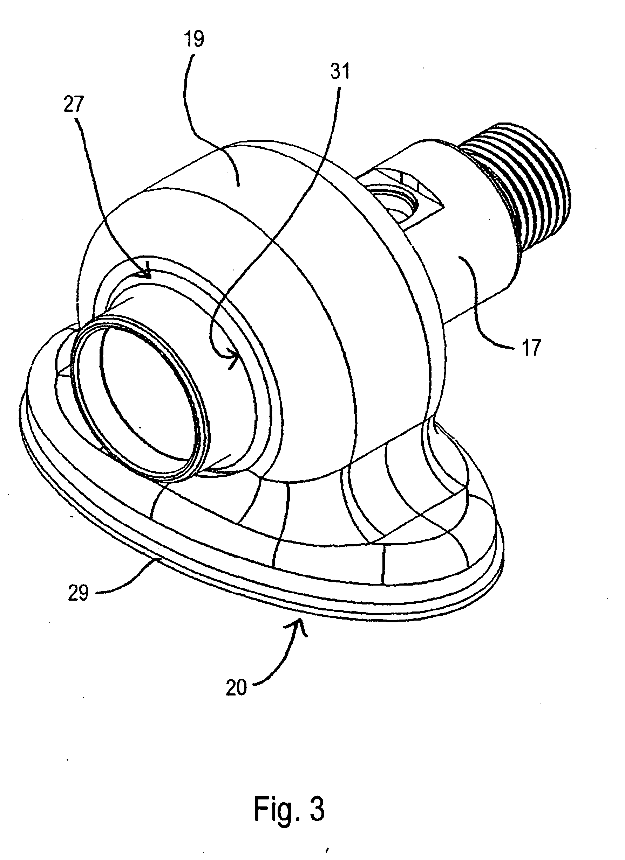

Die Gesamtanordnung nach Abschluss des Befestigungsvorgangs ist in Fig. 3 perspektivisch dargestellt. Wie aus Fig. 3 hervorgeht, liegen im Wesentlichen glatte und abgerundete Oberflächen vor, welche besonders leicht zu reinigen sind, Schlitze, Hohlräume, Ecken, Kanten, Gewindeabschnitte und sonstige Unregelmäßigkeiten, in welchen sich potentiell Reinigungsmittelrückstände und andere Ablagerungen sammeln können, sind nicht vorhanden. Durch ein einfaches Festschrauben werden sowohl der Sensor 17 in dem elastischen Element 13 als auch das Gehäuse 19 an dem Trägerbauteil 11 befestigt. Ein Klebevorgang ist nicht erforderlich. Da es ferner in der Regel auf die Drehstellung des Sensors 17 in der Durchführung 15 nicht ankommt, ergibt sich ein besonders einfacher Montagevorgang.

Insgesamt ermöglicht die Erfindung eine einfache und zuverlässige Befestigung von Sensoren in hygienisch sensiblen Bereichen.

### Bezugszeichenliste

- 11: Trägerbauteil
- 13: elastisches Element
- 15: Durchführung
- 17: Sensor
- 19: Gehäuse
- 20: Befestigungsseite
- 21: Öffnung
- 23: Überstandsabschnitt
- 25: Stirnfläche
- 27: Dichtlippe
- 29: Dichtelement
- 31: Durchführungsöffnung
- 33: Gewindesackloch
- 35: Andrückfläche

## Patentansprüche

1. Vorrichtung zur Befestigung eines Sensors (17) an einem Trägerbauteil (11), mit
einem elastischen Element (13), das eine Aussparung (15) zur Aufnahme zumindest eines Teils des zu befestigenden Sensors (17) aufweist, und
einem das elastische Element (13) aufnehmenden Gehäuse (19), wobei Befestigungsmittel zum Befestigen des Gehäuses (19) an dem Trägerbauteil (11) vorgesehen sind, die dazu ausgebildet sind, zusätzlich das Gehäuse (19) derart in Richtung einer Andrückfläche (35) des Trägerbauteils (11) vorzuspannen, dass ein im Bereich der Andrückfläche (35) aus einer Öffnung (21) des Gehäuses (19) ragender Überstandsabschnitt (23) des elastischen Elements (13) unter Verringerung des Querschnitts der Aussparung (15) zusammengedrückt wird.

2. Vorrichtung nach Anspruch 1,
**dadurch gekennzeichnet, dass**
an der Öffnung (21) des Gehäuses (19) ein Dichtelement (29) aus elastischem Material vorgesehen ist.

3. Vorrichtung nach Anspruch 1 oder 2,
**dadurch gekennzeichnet, dass**
der Überstandsabschnitt (23) des elastischen Elements (13) eine konkave Stirnfläche aufweist.

4. Vorrichtung nach zumindest einem der vorstehenden Ansprüche,
**dadurch gekennzeichnet, dass**
die Befestigungsmittel Schrauben umfassen, welche in das Gehäuse (19) und das Trägerbauteil (11) eingreifen.

5. Vorrichtung nach zumindest einem der vorstehenden Ansprüche,
**dadurch gekennzeichnet, dass**
das Gehäuse (19) eine Durchführung (31) für den Sensor (17) definiert, wobei das elastische Element (13) im Bereich der Durchführung (31) eine zwischen der Außenwand des zu befestigenden Sensors (17) und dem Gehäuse (19) wirksame Dichtlippe (27) bildet.

6. Vorrichtung nach zumindest einem der vorstehenden Ansprüche,
**dadurch gekennzeichnet, dass**
das Gehäuse (19) halbschalenartig ausgebildet ist und konvexe Außenflächen aufweist.

7. Vorrichtung nach zumindest einem der vorstehenden Ansprüche,
**dadurch gekennzeichnet, dass**
das Gehäuse (19) als Spritzgussteil ausgeführt ist, wobei das elastische Element (13) von dem Gehäuse (19) umspritzt ist.

## Claims

1. An apparatus for fastening a sensor (17) to a carrier component (11), having
an elastic element (13) which has a cut-out (15) for receiving at least one part of the sensor (17) to be fastened; and
a housing (19) receiving the elastic element (13),
wherein fastening means are provided for fastening the housing (19) to the carrier component (11) which are configured additionally to preload the housing (19) in the direction of a contact surface (35) of the carrier component (11) such that an overhang section (23) of the elastic element (13) projecting out of an opening (21) of the housing (19) in the region of the contact surface (35) is compressed while reducing the cross-section of the cut-out (15).

2. An apparatus in accordance with claim 1,
**characterised in that**
a sealing element (29) comprising elastic material is provided at the opening (21) of the housing (19).

3. An apparatus in accordance with claim 1 or claim 2,
**characterised in that**
the overhang section (23) of the elastic element (13) has a concave end face.

4. An apparatus in accordance with at least one of the preceding claims,
**characterised in that**
the fastening means include screws which engage into the housing (19) and into the carrier component (11).

5. An apparatus in accordance with at least one of the preceding claims,
**characterised in that**
the housing (19) defines a leadthrough (31) for the sensor (17), with the elastic element (13) forming a sealing lip (27) effective between the outer wall of the sensor (17) to be fastened and the housing (19) in the region of the leadthrough (31).

6. An apparatus in accordance with at least one of the preceding claims,
**characterised in that**
the housing (19) is configured in the manner of a half-shell and has convex outer surfaces.

7. An apparatus in accordance with at least one of the preceding claims,
**characterised in that**
the housing (19) is designed as an injection moulded part, with the elastic element (13) being overmolded by the housing (19).

## Revendications

1. Dispositif pour la fixation d'un capteur (17) sur un composant porteur (11), comprenant
un élément élastique (13), qui comporte une échancrure (15) pour recevoir au moins une partie du capteur à fixer (17), et
un boîtier (19) qui reçoit l'élément élastique (13), dans lequel il est prévu des moyens de fixation pour la fixation du boîtier (19) sur le composant porteur (11), qui sont réalisés pour précontraindre additionnellement le boîtier (19) en direction d'une surface de pressage (35) du composant porteur (11) de telle façon qu'un tronçon en porte-à-faux (23), en saillie dans la région de la surface de pressage (35) hors d'une ouverture (21) du boîtier (19), de l'élément élastique (13) est comprimé en réduisant la section transversale de l'échancrure (15).

2. Dispositif selon la revendication 1,
**caractérisé en ce qu'**il est prévu un élément d'étanchement (29) en matériau élastique au niveau de l'ouverture (21) du boîtier (19).

3. Dispositif selon la revendication 1 ou 2,
**caractérisé en ce que** le tronçon en porte-à-faux (23) de l'élément élastique (13) comporte une surface frontale concave.

4. Dispositif selon l'une au moins des revendications précédentes,
**caractérisé en ce que** les moyens de fixation comprennent des vis qui s'engagent dans le boîtier (19) et dans le composant porteur (11).

5. Dispositif selon l'une au moins des revendications précédentes,
**caractérisé en ce que** le boîtier (19) définit une traversée (31) pour le capteur (17), est l'élément élastique (13) forme dans la région de la traversée (31) une lèvre d'étanchéité (27) efficace entre la paroi extérieure du capteur à fixer (17) et le boîtier (19).

6. Dispositif selon l'une au moins des revendications précédentes,
**caractérisé en ce que** le boîtier (19) est réalisé à la manière d'une demi-coque et présente des surfaces extérieures convexes.

7. Dispositif selon l'une au moins des revendications précédentes,
**caractérisé en ce que** le boîtier (19) est réalisé sous la forme d'une pièce coulée par injection, et l'élément élastique (13) est enrobé par le boîtier (19).
